# EUROPEAN PATENT SPECIFICATION

(11) **EP 0 865 984 B1**
(45) Date of publication and mention of the grant of the patent: **08.10.2003**
(21) Application number: 98109548.2
(22) Date of filing: 20.11.1995
(51) Int. Cl.: B62K 19/36, B62J 1/08, B62M 23/02

(54) **Seat fastening device for a bicycle**
Befestigungsvorrichtung für Fahrradsattel
Dispositif de fixation pour selle de bicyclette

(30) Priority: 18.11.1994 JP 28518294; 28.12.1994 JP 33903394
(43) Date of publication of application: 23.09.1998
(62) Divisional of application: 95118231.0
(73) Proprietor: YAMAHA HATSUDOKI KABUSHIKI KAISHA, Iwata-shi Shizuoka-ken, 438 (JP)
(72) Inventor: Ishikawa, Satoshi, Iwata-Shi, Shizuoka-ken (JP); Iwami, Kazuaki, Iwata-Shi, Shizuoka-ken (JP); Ohira, Masaru, Iwata-Shi, Shizuoka-ken (JP)
(74) Representative: Grünecker, Kinkeldey, Stockmair & Schwanhäusser Anwaltssozietät

(56) References cited:
- EP-A- 0 079 573
- WO-A-94/25330
- DE-U- 9 005 166
- US-A- 5 044 592
- US-A- 5 297 846
- PATENT ABSTRACTS OF JAPAN vol. 018, no. 682 (M-1729), 22 December 1994 & JP 06 270867 A (YAMAHA MOTOR CO LTD), 27 September 1994

## Description

This invention relates to a seat fastening device for a bicycle, in particular power-assisted bicycle.

In recent years, electric motor-assisted bicycles have been put to practical use, in which both human power drive system and electric motor drive system are employed to assist the human drive power with the electric motor drive power, as disclosed for example in the Japanese Patent Publication Hei (published March 14, 1990) 2-74491. With the electric motor-assisted bicycle, the pedal force input from the pedals is detected and when the load on the rider increases the motor drive power is increased to alleviate the load on the rider.

Such an electric motor-assisted bicycle is provided with batteries mounted on the vehicle for driving the electric motor. Such batteries are mounted near the seat tube located in the middle of the vehicle not to imbalance the vehicle. Also the batteries are mounted usually behind the seat tube so as not to hinder the movement of legs of the rider when riding on and getting off, and during riding. In that case, the batteries are put into a box for protection against mud and dust from outside, and the box is secured behind the seat tube. However, it is also possible to secure the box in front of the seat tube, if behind the seat tube there is no space or the space is used for other purposes.

In addition, it is preferable that the batteries can be taken out from and replaced again into the box secured to the vehicle body for charging, repairing; etc. For that purpose, it will be convenient if the batteries can be drawn up from the box and inserted back into the box. However, a seat (saddle) of the bicycle is located on the top of the seat tube to which the box is secured. Therefore, if the seat remains in the position for riding, the seat stands in the way of vertical movement of the batteries and the batteries cannot be drawn up or inserted back.

Therefore, a proposal has been made as described in the Japanese Patent Publication JP 06 270 867 A in which the seat post is folded or the seat post together with the seat is removed to open up the space above the box. However, when the seat post so as to avoid the seat height adjustment range. As a result, the seat post has to be drawn out from the seat tube for the corresponding length, which is cumbersome. Furthermore, folding and removal of the seat tube involves loosening and tightening of screws, which is not necessarily easy.

US 5,297,846 A discloses a bicycle seat assembly comprising a rigid support member having means to be adjustably attached to a standard seat tube on a bicycle when the rigid support member has an upward/forward standing body portion. Attached to the body portion is a pivoting extension arm which may be rotated between rearward extending position and a forward extending position. A seat and a small secondary seat are attached to said pivoting extension arm. Therefore, the rider is able to choose between the two seats while riding the bicycle.

It is an objective of the present invention to provide an improved seat fastening device for a bicycle, in particular a power-assisted bicycle, which always ensures a reliable attachment and simultaneously is easily releasable to facilitate the access to compartments secured to the seat post of the bicycle.

According to the present invention, this objective is solved by a seat fastening device comprising the features of claim 1.

According to another advantageous embodiment of the present invention, said rotating portion is rotatable about a pin provided at said support portion.

In order to prevent an unintentionally disengagement, it is advantageous when said engagement stop comprises an engagement stop pin constantly forced by a coil spring and is arranged on a side of said rotating portion opposite to said pin.

Other preferred embodiments of the present invention are laid down in the further dependent claims.

In the following, the present invention is explained in greater detail with respect to several embodiments thereof in conjunction with the accompanying drawings, wherein:
FIG. 1 is a side view, with the cover removed, of an electric motor- assisted bicycle provided with a battery holding structure;
FIG. 2 is a side view of completed state of the electric motor-assisted bicycle shown in FIG. 1;
Fig. 3 is a sectional side view of the inner box of the embodiment;
FIG. 4 is a side view of the outer box of the embodiment;
FIG. 5 is a schematic wiring diagram within the outer box;
Fig. 6 shows a cross section as seen along the lines VI-VI of Fig. 3 on the terminal plate of the inner box;
Fig. 7 is a fractional section front view of the terminal plate of the outer box;
FIG. 8 is a side view showing the relationship between the seat structure and the battery holding structure of the electric motor-assisted bicycle;
FIG. 9 is a side view of a modified embodiment;
FIG. 10 is a side view of another modified embodiment;
Fig. 11 is a side view of the inner box of a further modified embodiment; and
Fig. 12 is a fractional view of the embodiment according to Fig. 11.

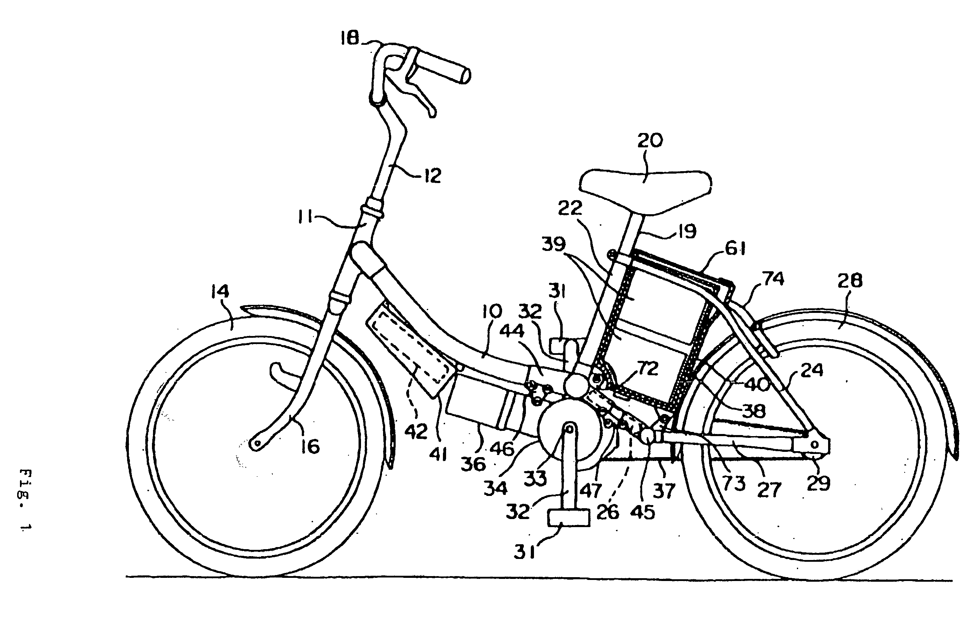

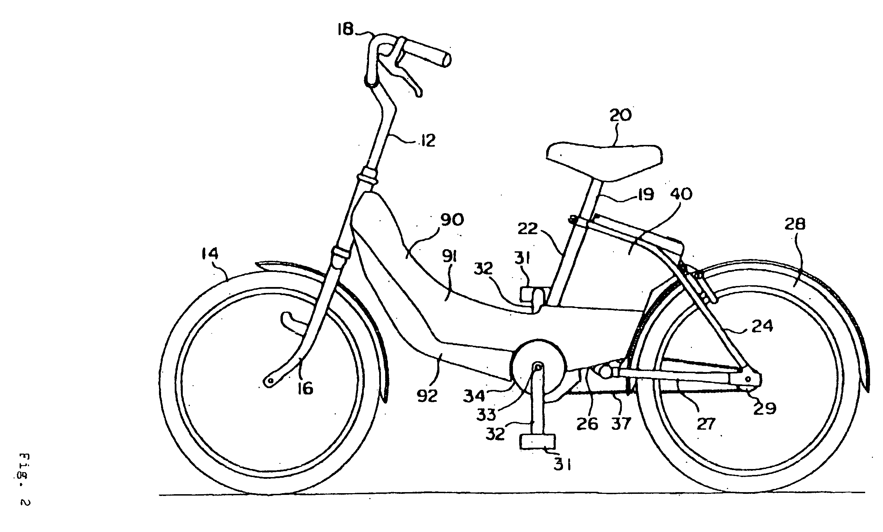

FIG. 1 shows a side cross section of an electric motor-assisted bicycle provided with a battery holding structure according to the invention, with a cover (90, FIG. 2) removed.

In the figure are shown; a main tube (10), a head tube (11) secured to the front portion of the main tube (10), a handle stem (12) inserted into the head tube (11) for axial rotation therein, a front fork (18) secured to the lower portion of the handle stem (12), a front wheel (14) rotatably attached to the front fork (16), and handlebars (18) extending to right and left and secured to the upper portion of the handle stem (12).

The main tube (10) extends from front obliquely back downward and at its rear end is secured a middle lug (44) to which are secured a seat tube (22) and a rear tube (26). The main tube (10) is arched downward so that even a female rider in a skirt can easily straddle over the main tube (10) to ride the bicycle.

The seat tube (22) supports a seat post (19) to which a seat (20) is secured. Paired chain stays (27) are secured through a hanger lug (45) to a rear tube (25). The chain stays (27) and the seat tube (22) are connected by right and left paired seat stays (24). As shown in the figure, the seat tube (22), the seat stays (24), the rear tube (26), and the chain stays (27) are arranged generally in a triangular shape to support the weight of the rider. A rear wheel (28) is rotatably attached to a connecting portion between the seat stays (24) and the chain stays (27).

Below the middle lug (44) and the hanger lug (45) is mounted a power unit (34) by way of brackets (46, 47). The power unit (34) includes a human power drive system, an electric motor drive system, and a mechanism for combining the powers of both systems. A crank shaft (33) is attached to the case of the power unit (34). Cranks (32) are attached to both ends of the crank shaft (33). Each of the cranks (32) is provided with a pedal (31). The symbol (38) denotes an electric motor.

Rotation of the crank shaft (33) when the rider depresses the pedals (31) is transmitted through the mechanism in the power unit (34) to a chain (37), and further transmitted through a freewheel (29) to the rear wheel (28) to propel the motor-assisted bicycle by the rotation of the rear wheel (28). On the other hand, when the electric motor (36) is driven, the rotation of its rotor is transmitted through other mechanism in the power unit (34) to the chain (37) to rotate the rear wheel (28). Thus, the motor-assisted bicycle is provided with a drive system to which human power is transmitted through the crank shaft (33) and a drive system using the electric motor (36).

A casing (41) is secured to the lower portion of the main tube (10) holding a controller (42) therein. Current for driving the electric motor (38) is supplied by chargeable batteries (39). The supporting structure for the batteries (39) will be described later. The batteries (39) supply current to the electric motor (38) while the controller regulates the current.

In other words, when the human drive power or the pedal force applied through the pedal (31), the crank (32), and the crank shaft (33) is large, the controller (42) increases the current to the electric motor (36) and reduces the current when the pedal force is small. Thus, the drive force of the electric motor (36) is increased when the burden on the rider is large so that the burden on the rider can be reduced. The electric motor (36) may be for example a permanent magnet type DC motor or a DC series-wound motor. The controller (42) is preferably of a chopper type capable of changing the on-off time ratio (duty ratio) of a DC voltage according to the torque.

FIG. 2 is a side view of the complete motor-assisted bicycle, the vehicle body of the motor-assisted bicycle is provided with a cover (90) over the main tube (10). The cover (90) is made up of an upper cover (91) and a lower cover (92). The upper cover (91) covers the main tube (10), the lower portion of the seat tube (22), the rear tube (28), and the lower portion of an outer box (40) of the batteries (39). The lower cover (92) covers the electric motor (36), and the casing (41). The upper surface of the upper cover (91) is curved along the main tube (10).

The batteries (39) are held in two heights in an inner box (38) which in turn is housed in an outer box (40). The outer box (40) is located between the seat tube (22) and the rear wheel (28), and secured to the seat tube (22), the seat stays (24), and the rear tube (26).

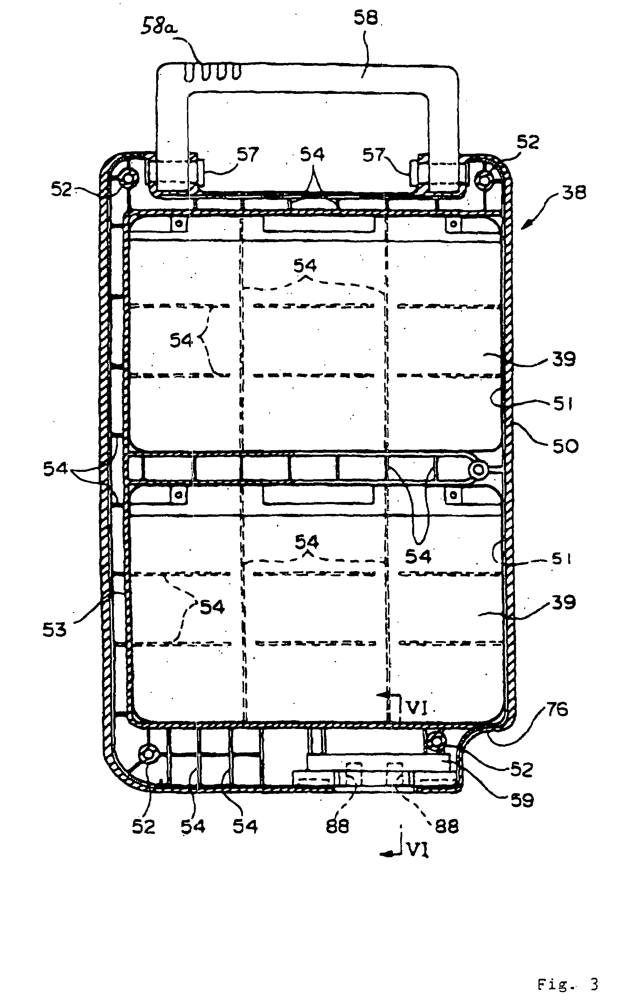

Fig. 3 shows a longitudinal section of the inner box (38). The inner box (38) is made to form a generally rectangular parallelepiped by fitting together two pieces (50) generally symmetric with each other. Each piece (50) is formed with upper and lower holding chambers (51), each holding a battery (39).

In Fig 3, the surface of the piece (50) to be mated with the corresponding other piece is shown with hatching. In other words, the batteries (39) are fitted into respective holding chambers (51) of the one piece (50), and while mating the hatched surface with the corresponding surface of the other piece and fitting the batteries (39) respectively into the holding chambers (51) of the other piece the batteries (39) are completely held in the inner box (38). Four sleeves (52) are formed in four corners of the piece (50) so that both pieces (50) are joined together by inserting bolts into the sleeves and screwing nuts on the bolt ends.

A hollow space is provided between a wall (53) forming the holding chamber (51) and the outer wall of the piece (50). A number of ribs (54) are formed in the hollow space. A hollow space is also provided between the bottom wall of the upper holding chamber (51) and the top wall of the lower holding chamber (51). A number of ribs (54) are also formed in that hollow space. Thus, even when the inner box (38) is dropped by any chance or when the motor-assisted bicycle with the batteries falls, shocks are damped to reduce damage on the batteries (39) held inside. Furthermore, these spaces are used to route leads connected to the batteries (39).

In a space in the lower portion of the inner box (38) is arranged a terminal plate (59) which will be described later to which are connected the leads described above. The terminal plate (59) is for discharging from the batteries (39) or power supply to the power unit (34) and for charging the batteries (39) when the inner box (38) together with the batteries (39) is taken out of the outer box (40).

At the top portion of the piece (50) is attached a handle (58) by a pin (57) so as to be rotatable about the pin (57). Thus, the handle (58) can be folded or pulled up on the top surface of the piece (50). The top surface of the piece (50) is formed with a recess to receive the handle (58) when it is folded so as not to protrude. Said handle (58) comprising marking indications (58a) to facilitate the pre-orientation of the inner box (38) with respect to the outer box (40) for inserting said inner box (38) in correct orientation into the outer box (40).

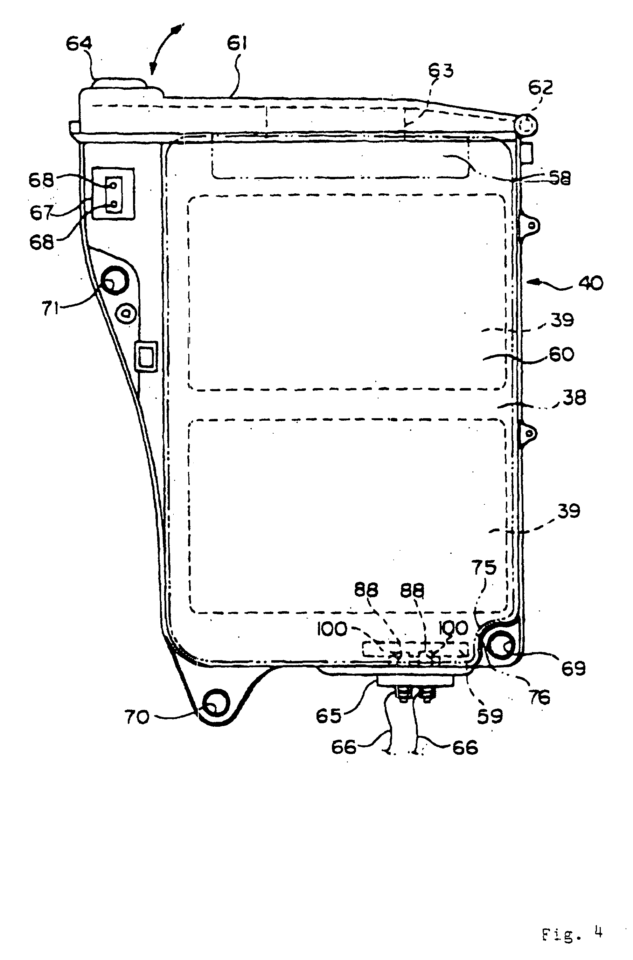

FIG. 4 is a side view of the outer box (40). The outer box (40) has a main body (80) as an open-top box of a generally rectangular parallelepiped shape to receive the inner box (38) inserted from above. The top surface of the outer box (40) is provided with a top lid (61) capable of being opened or closed by rotating about a pin (62) attached to one end of the upper portion of the main body (60). When the top lid (81) is closed, the inside of the outer box (40) is completely isolated from the outside to prevent entry of mud, rainwater or dust and keep the inner box (38) clean.

To the inner side of the top lid (61) is attached a damping member (63) so that the inner box (38) is pressed from above and secured in a fixed position when the top lid (61) is closed. Furthermore, the inner box (38) located inside the outer box (40) is protected from shocks applied from the outside. The symbol (64) denotes an outer cylinder provided with a key hole. Though not shown, a lock box is provided in the upper portion of the main body (60) to be locked by inserting a key into the outer cylinder (64).The key may be the same as that used for starting the power unit (34) and for locking the wheel.

The main body (80) is provided with holes (69, 70, 71). As shown in FIG. 1, the middle lug (44) is formed with a projection (72). The hole (69) is for being screwed down to the projection (72). The hanger lug (45) is also formed with a projection (73) so that the hole (70) is screwed down to it. To the seat stays (24) are attached a securing member (74) so that the hole (71) is screwed down to it.

Since the hole (89) is formed in a comer of the bottom of the outer box (40), a projection (75) is formed at the bottom of the inner space of the outer box (40). The bottom of the inner box (38) is formed with a complementary recess (76) corresponding to the projection (78). This prevents a user from inserting the inner box (38) in wrong orientation into the outer box (40).

On the underside of the bottom of the main body (60) is attached a terminal plate (65) which will be described later to which are connected leads (66) for driving the power unit (34) described before. The terminal plate (65), together with the terminal plate (59) located inside the inner box (38), is for supplying power from the batteries (39) to the power unit (34) by making wiring connection in between.

To a side of the main body (60) is attached a terminal plate (67) for charging only. The terminal plate (67) for charging only is for charging the batteries (39) in the inner box (38) remaining as stored in the outer box (40), and provided with socket holes (68) for receiving a charge plug. Normally when the batteries (39) are not being charged, the socket holes (68) are covered with a rubber cap (not shown).

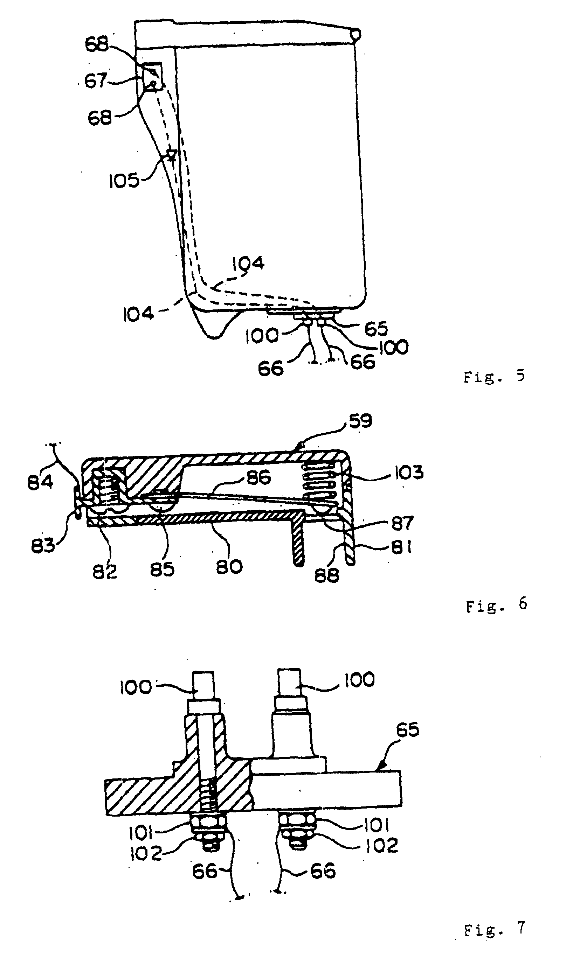

FIG. 6 shows the terminal plate (59) located in the inner box (38) described before. The terminal plate (59) has a base portion (80) secured to the inner box (38), and a socket portion (81) projecting downward from the base portion (80).

A terminal (83) is screwed with a screw (82) to the base portion (80) and connected by a lead (84) to the positive terminal of the batteries (39). A metallic plate spring (86) is secured with a rivet (85) to the terminal (89) so as to deflect up and down with respect to the rivet (85) as a fixed point. The fore-end of the plate spring (86) is raised with metallic material as a contact point (87). An identical terminal (83) and plate spring (86) are also arranged in a position corresponding to the back of FIG. 6, with its terminal (83) connected through a lead (84) to the negative terminal of the batteries (39).

The socket portion (81) is formed with two socket holes (88) (FIG. 3) which are open downward. The socket holes (88) are arranged so that two terminal plugs (100) (FIG. 7) secured to the terminal plate (65) are inserted respectively.

As shown in FIG. 7, one end of each of the terminal plugs (100) is formed with a male thread. The terminal plugs (100) penetrate the terminal plate (65) and are secured to the terminal plate (65) as nuts (101, 102) are screwed to the male threads. Leads (66) are also connected to the terminal plugs (100) using the nuts (101, 102).

As shown in FIG. 4, when the inner box (38) is inserted into the outer box (40), the upper ends of the terminal plugs (100) enter the socket holes (88) and come into contact with the contact points (87). Thus, power is supplied from the terminal of the batteries (39) through the lead (84), the terminal (83), the plate spring (86), the contact point (87), the terminal plug (100), and the lead (66) to the power unit (34).

Inside the base portion (80) of the terminal plate (59) is arranged a coil spring (103) to exert a downward force on the plate spring (86) to maintain contact between the terminal plug (100) and the contact point (87) when the terminal plug (100) enters the socket hole (88).

After the inner box (38) is taken out of the outer box (40), the batteries (39) are charged by inserting terminal plugs of a charger into the socket holes (88). On the other hand, the battery holding structure is so arranged that the batteries (39) can be charged while the inner box (38) is held in the outer box (40) if the terminal plugs of the charger are inserted into the socket holes (68) in the terminal plate (67) for charging only.

FIG. 5 is a schematic drawing to show wiring to the socket holes (68). Sockets (68) are respectively connected by leads (104) to the terminal plugs (100). Since the batteries (39) are connected to the terminal plugs (100) when the inner box (38) is held in the outer box (40), the batteries (39) are also connected to the socket holes (68).

In this case, since the voltage of the batteries (39) is applied to the terminal plugs (100), and the same voltage is also applied directly to the leads (104), there is a possibility of short circuit between metallic parts. Therefore, a diode (105) is interposed in the middle of one lead (104) to prevent the short circuit. The interposition of the diode (105) also prevents electricity of the batteries (39) from being stolen from the socket holes (68).

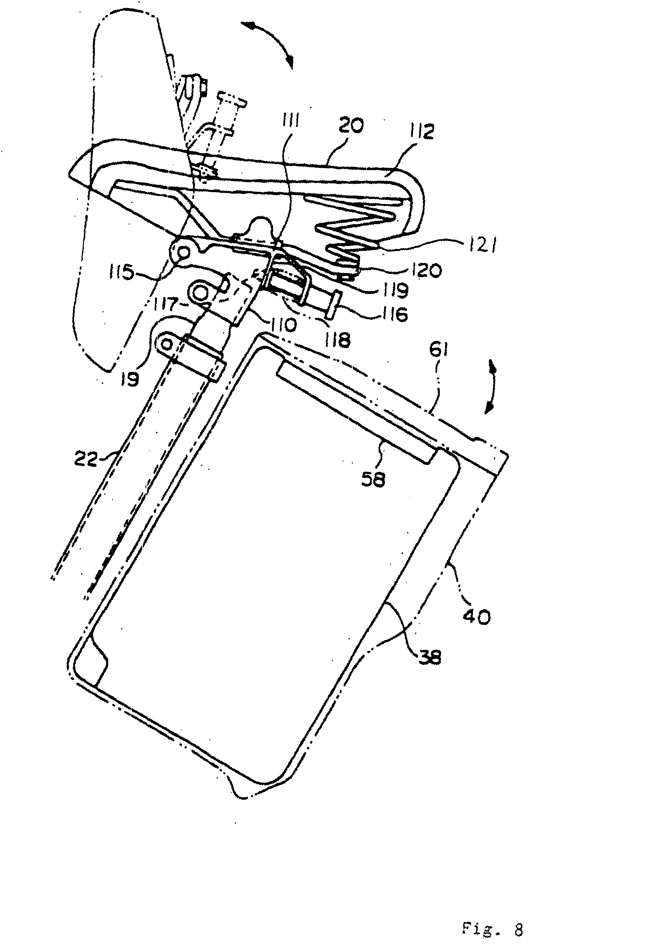

As described before, the outer box (40) is arranged between the seat tube (22) and the rear wheel (28). This embodiment is arranged so that the inner box (38) can be easily taken out of the outer box (40) by opening the lid (61) even when the seat (20) is adjusted to a low position, FIG. 8 shows the attachment structure for the seat (20). The seat (20) has a support portion (110) secured to the seat post (20), a rotating portion (111) attached for free rotation to the support portion (110), and a seat portion (112) for the rider to be seated.

The rotating portion (111) is rotatable about a pin (115) attached to the support portion (110). An engagement stop pin (116) is attached on the opposite side of the pin (115) of the rotary portion (111). One end of the engagement stop pin (116) is inserted into a hole (117) formed in the support portion (110). The engagement stop pin (116) is constantly forced by a coil spring (118) toward the support portion (110). The symbol (119) denotes an intermediate plate for supporting the engagement stop pin (116). A base portion (120) of the seat portion (112) is secured to the rotating portion (111), whereas at least one support spring (121) is provided between the seat portion (112) and the base portion (120).

Here, if the engagement stop pin (116) is pulled against the urging force of the coil spring (118) in the direction apart from the support portion (110), the engagement stop pin (116) is drawn out of the hole (117). Thus, the rotating portion (111) rotates together with the seat portion (112) about the pin (115). When the seat portion (112) is tilted forward as shown with phantom lines, there is nothing in the way above the outer box (40). Thus, the top lid (61) of the outer box (40) can be opened so that the inner box (38) can be inserted into or taken out of the outer box (40).

Next will be described the function of charging the batteries (39) using the battery holding structure of this embodiment. First, when a location where the motor-assisted bicycle is stored is distant from a power source, the inner box (38) holding the batteries (39) is brought by hand to the location of the power source. In this case as described before, the seat portion (112) of the seat (20) is tilted forward, the top lid (61) is unlocked and opened, and the inner box (38) is taken out of the outer box (40) by gripping the handle (58).

Then, the terminal plug of the charger is inserted into the socket holes (88) of the inner box (38) to perform charging. In the state of being mounted on the vehicle, since the inner box (38) is held in the outer box (40), it is prevented from being soiled by mud or dust. Therefore, the batteries (39) which is taken out, together with the inner box (38) as it is clean, from the vehicle can be brought into a house or the like to charge the batteries (39).

Since the top lid (61) of the outer box (40) Is locked after the inner box (38) is taken out, while the batteries (39) are being charged, rain water or dust is prevented from finding its way into the outer box (40) to prevent electric connections of the vehicle or the terminal plugs (100) from deteriorating. The locking of the top lid (61) also prevents the inside of the outer box (40) from being tampered.

When the charging of the batteries (39) is over, the top lid (61) is unlocked and opened, and the inner box (38) is replaced into the outer box (40). Thus, the batteries can be easily and securely installed into the vehicle. In this case as described before, the terminal plugs (100) are inserted into the socket holes (88) of the inner box (38). This makes wiring connection between the batteries (39) and the vehicle with ease and reliability.

After the inner box (38) is installed, the top lid (61) of the outer box (40) is closed and locked. As described above, since the top lid is closed tightly and the electrical connection between the batteries (39) and the power unit (34) or the insertion of the terminal plugs (100) into the socket holes (88) is performed within the outer box (40), the connection is prevented from being wetted by rain water or soiled by dust, thereby preventing its deterioration. Furthermore, since the batteries (39) are doubly surrounded by the outer box (40) and the inner box (38), possible damage on the batteries is reduced by damping shocks as when the motor-assisted bicycle falls.

Furthermore, since the terminal plate (87) for charging only is provided on the outer box (40), the batteries (39) can be charged as they are in the inner box (38) on the vehicle. In this case, charging is made by inserting the terminal plug of the charger into the socket holes (68). This makes it possible, if a power source is near the location where the motor-assisted bicycle is stored, to charge the batteries (39) without taking the inner box (38) out of the outer box (40).

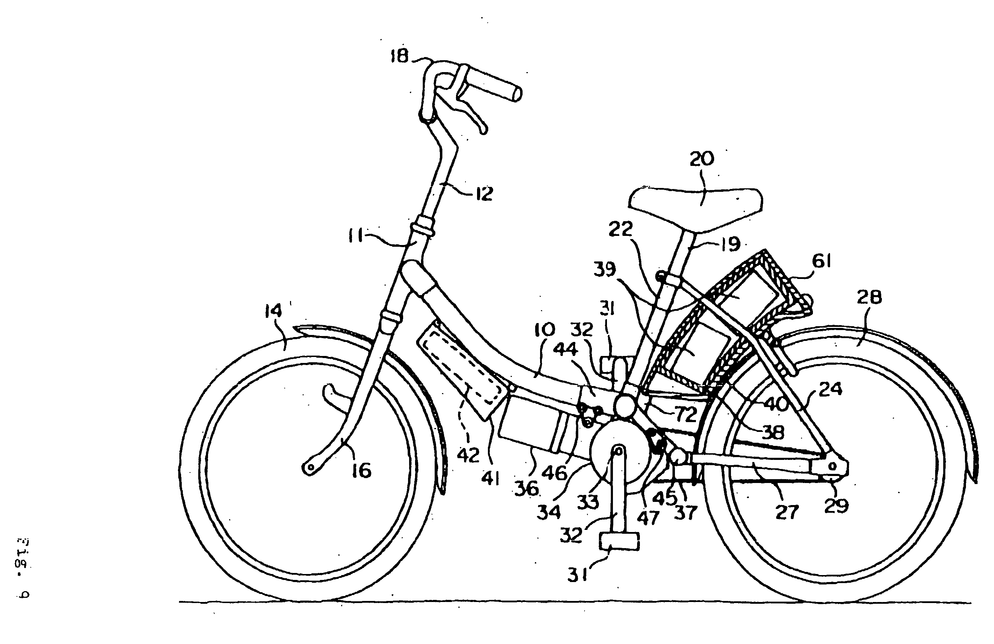

FIG. 9 shows a modification of the embodiment described above. In the previous embodiment, the inner box (38) of a generally parallelepiped shape is held inside the outer box (40) of a generally parallelepiped shape. However, the shape of those boxes is not limited to that. It may also be arranged as shown in FIG. 9 in which an inner box (38) having arcuate front and back surfaces is inserted into an outer box (40) also having arcuate front and back surfaces. In this modified embodiment as shown in the figure, since the top lid (61) of the outer box (40) can be arranged to avoid the location immediately below the seat (20), unlike the previous embodiment, the Inner box (38) can be taken out easily without tilting forward the seat portion of the seat (20).

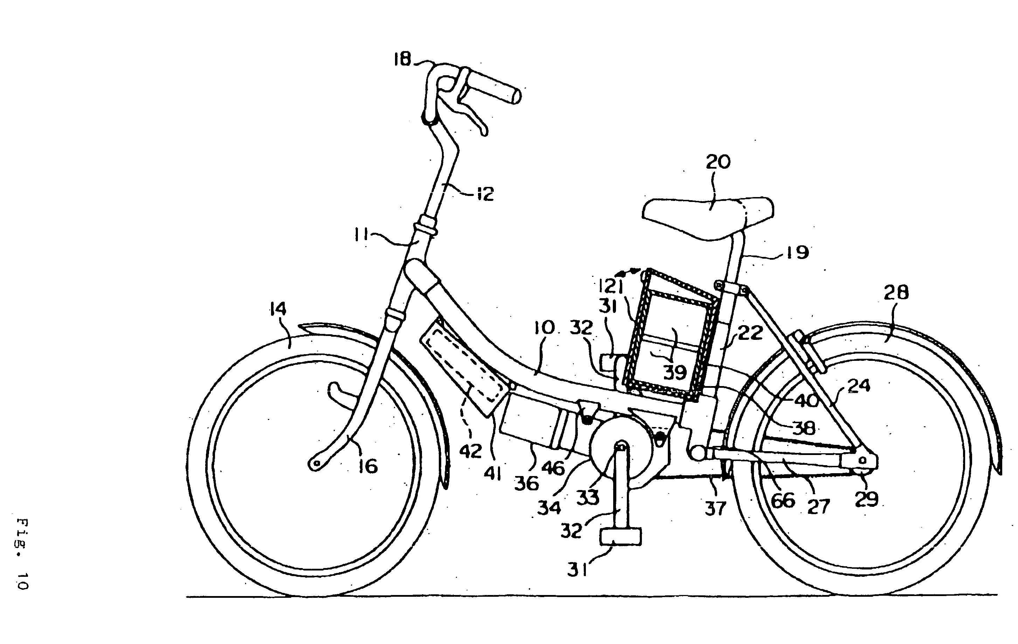

FIG. 10 shows still another modified embodiment. While the outer box (40) is arranged behind the seat tube (22) in the previous embodiment, in this embodiment the outer box (40) is located in front of the seat tube (22), and the outer box (40) is supported by the seat tube (22) and the main tube (10). In this case, a lid (121) is preferably provided in the front portion of the outer box (40) so that entry and exit of the inner box (38) is made from the front of the outer box (40). However, It may also be arranged that a lid (61) similar to that described above is provided and the seat portion of the seat (20) is tilted backward in opposition to the previous embodiment.

Furthermore in the embodiment shown in FIG. 10, it is possible to curtail the rear portion of the seat (20) as shown with phantom lines. In this case, the inner box (38) can be taken out by loosening tightening between the seat post (19) and the seat tube (22), turning the seat post (19) by 180 degrees so that the space above the outer box (40) is cleared, and opening the lid (61).

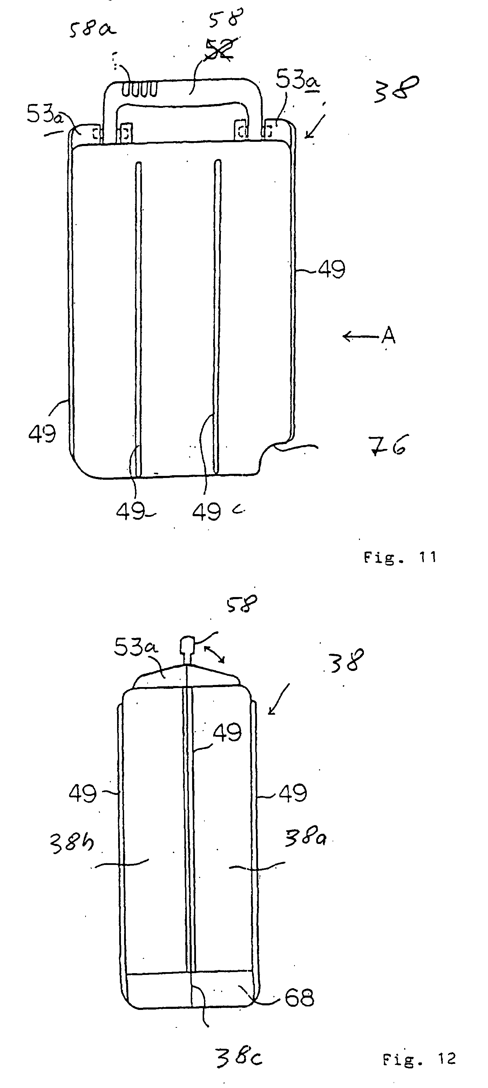

Still a further embodiment is shown in figs. 11 and 12. In order to facilitate the insertion of the inner box (38) into the outer box (40) the inner box comprises longitudinal ribs (49), adapted to extend in the direction of insertion of the inner box (38) into the outer box (40). These ribs (49) reinforce the inner box (38) as well as reduce the frictional force applied to the inner box during insertion.

As can be seen in figs. 11 and 12 the pins (57) (fig. 3) pivotably fixing said handle (58) are arranged in a space formed by two wall portions (53a) the upper periphery edges of them abutting at the top of the inner box (38).

As is apparent from fig. 12, the inner box (38) may be composed of two halves (38a,38b) fixed to each other along the line (38c).

While the embodiments described above are applications of the battery holding structures to the motor-assisted bicycle, this invention is not limited to such embodiments but the same structures may be applied to motor-operated vehicles and motorcycles.

As described above, the inner box is protected from soiling by mud and dust, and thereby the inner box together with the batteries as remaining clean can be brought into the house. The batteries can be mounted on the vehicle easily and reliably by simply putting the inner box into the outer box. It is also possible to protect the batteries from shocks as when the vehicle falls.

Further, the electrical connections are prevented from being wetted with rain water and covered with dust, thereby preventing the electrical connections from deteriorating.

In addition, rain water and dust are prevented from entering the outer box after the inner box together with the batteries is taken out of the outer box, thereby preventing the electrical connections from deteriorating. Furthermore, by locking the lid, the inside of the outer box is prevented from being tampered.

Moreover, the batteries can be charged not only when they are removed from the vehicle but also when they are mounted on the vehicle.

## Claims

1. A seat fastening device for a bicycle, in particular power-assisted bicycle, comprising a support portion (110) fastened to a seat post (19) insertable into a seat tube (22) of said bicycle, a rotating portion (111) pivotably linked to said support portion (110) for supporting a seat portion (112) of said bicycle **characterized in that** said support portion (110) comprising a hole (117) to act together with an engagement stop member (116,118) for easily fastening or easily releasing said rotating portion (111).

2. A seat fastening device according to claim 1, **characterized in that** said rotating portion (111) is rotatable about a pin (115) provided at said support portion (110).

3. A seat fastening device according to claim 2, **characterized in that** said engagement stop (116,118) comprises an engagement stop pin (116) constantly forced by a coil spring (118) and is arranged on a side of said rotating portion (111) opposite to said pin (115).

4. A seat fastening device according to claim 3, **characterized in that** said coil spring (118) is substantially coaxially arranged with said engagement stop pin (116).

5. A seat fastening device according to at least one of the preceding claims 2 to 4, **characterized in that** an intermediate plate (119) is provided for supporting said engagement stop pin (116).

6. A seat fastening device according to at least one of the preceding claims 1 to 5, **characterized in that** a base portion (120) of said seat portion (112) is fastened to said rotating portion (111).

7. A seat fastening device according to 6, **characterized in that** at least one support spring (121) is provided between said seat portion (112) and said base portion (120).

8. A power-assisted bicycle with a seat fastening device according to at least one of the preceding claims 1 to 7, **characterized in that** said pivotable linkage between said support portion (110) and said rotating portion (111) is arranged on a side of said seat post (19) opposite to a battery holding structure accommodating at least one battery (39) for supplying an electric motor (36) of said power-assisted bicycle with electrical power, whereas said battery holding structure is fastened in front of said seat tube (22) or between said seat tube (22) and a rear wheel (28) of said bicycle.

9. A power-assisted bicycle with a seat fastening device according to claim 8, **characterized in that** said bicycle comprises a cover (90) over a main tube (10), wherein said cover (90) comprises an upper cover (91) covering said main tube (10), a lower portion of said seat tube (22), a lower portion of a rear tube (26) and a lower portion of said battery holding structure, arid a lower cover (92) covering said electric motor (36) and a casing of a controller (42).

## Patentansprüche

1. Sitzbefestigungsvorrichtung für ein Fahrzeug, insbesondere für ein motorunterstütztes Fahrrad, mit einem Lagerabschnitt (110), befestigt an einem Sitzträger (19), einsetzbar in ein Sitzrohr (22) des Fahrrades, einem Drehabschnitt (111), drehbar mit dem Lagerabschnitt (110) verbunden, um einen Sitzabschnitt (112) des Fahrrades zu lagern, **dadurch gekennzeichnet, dass** der Lagerabschnitt (110) mit einer Ausnehmung (117) versehen ist, um mit einem Eingriffsstoppteil (116, 118) zusammenzuwirken, zum leichten Befestigen oder Lösen des Drehabschnittes (111).

2. Sitzbefestigungsvorrichtung nach Anspruch 1, **dadurch gekennzeichnet, dass** der Drehabschnitt (111) um einen Bolzen (115), vorgesehen an dem Lagerabschnitt (110), drehbar ist.

3. Sitzbefestigungsvorrichtung nach Anspruch 2, **dadurch gekennzeichnet, dass** der Eingriffsstopp (116, 118) einen Eingriffsstoppbolzen (116), konstant durch eine Schraubenfeder (118) gedrückt, aufweist und auf einer Seite des Drehabschnittes (111), dem Bolzen (115) gegenüberliegend, angeordnet ist.

4. Sitzbefestigungsvorrichtung nach Anspruch 3, **dadurch gekennzeichnet, dass** die Schraubenfeder (118) im Wesentlichen koaxial mit dem Eingriffsstoppbolzen (116) angeordnet ist.

5. Sitzbefestigungsvorrichtung nach zumindest einem der vorhergehenden Ansprüche 2 bis 4, **dadurch gekennzeichnet, dass** eine Zwischenplatte (119) vorgesehen ist, um den Eingriffsstoppbolzen (116) zu lagem.

6. Sitzbefestigungsvorrichtung nach zumindest einem der vorhergehenden Ansprüche 1 bis 5, **dadurch gekennzeichnet, dass** ein Basisabschnitt (112) des Sitzabschnittes (112) an dem Drehabschnitt (111) befestigt ist.

7. Sitzbefestigungsvorrichtung nach Anspruch 6, **dadurch gekennzeichnet, dass** zumindest eine Lagerfeder (121) zwischen dem Sitzabschnitt (112) und dem Basisabschnitt (120) vorgesehen ist.

8. Motorunterstütztes Fahrrad mit einer Sitzbefestigungsvorrichtung nach zumindest einem der vorhergehenden Ansprüche 1 bis 7, **dadurch gekennzeichnet, dass** eine schwenkbare Verbindung zwischen dem Lagerabschnitt (110) und dem Drehabschnitt (111) auf einer Seite des Sitzträgers (19), gegenüberliegend zu einem Batteriehalteaufbau, der zumindest ein Batterie (39) zum Zuführen von Elektroenergie zu einem Elektromotor (36) des motorunterstützten Fahrrades aufnimmt, vorgesehen ist, während der Batteriehalteaufbau vor dem Sitzrohr (22) oder zwischen dem Sitzrohr (22) und einem Hinterrad (28) des Fahrrades befestigt ist.

9. Motorunterstütztes Fahrrad mit einer Sitzbefestigungsvorrichtung nach Anspruch 8, **dadurch gekennzeichnet, dass** das Fahrrad eine Abdeckung (90) über einem Hauptrohr (10) aufweist, wobei die Abdeckung (90) eine obere Abdeckung (91), die das Hauptrohr (10), einen unteren Abschnitt des Sitzrohres (22), einen unteren Abschnitt eines Rückrohres (26) und einen unteren Abschnitt des Batteriehalteaufbaus abdeckt, und eine untere Abdeckung (92), die den Elektromotor (36) und ein Gehäuse einer Steuerung (42) abdeckt, aufweist.

## Revendications

1. Dispositif de fixation pour selle de bicyclette, en particulier une bicyclette à assistance motrice, comprenant une partie support (110), fixée sur un pilier de selle (19) pouvant être inséré dans un tube de selle (22) de ladite bicyclette, une partie rotative (111), reliée à pivotement à ladite partie support (110) pour supporter une partie de selle (112) de ladite bicyclette, **caractérisé en ce que** ladite partie support (110) comprend un trou (117), devant agir, conjointement avec un élément de butée par mise en prise (116, 118), pour aisément fixer ou aisément désolidariser ladite partie rotative (111).

2. Dispositif de fixation de selle selon la revendication 1, **caractérisé en ce que** ladite partie rotative (111) est susceptible de tourn er autour d'une tige (115), prévue sur ladite partie support (110).

3. Dispositif de fixation de selle selon la revendication 2, **caractérisé en ce que** ladite butée par mise en prise (116, 118) comprend une tige de butée par mise en prise (116), soumise à u ne force constante par un ressort hélicoïdal (118) et agencée sur un côté de ladite partie rotative (111), opposé à ladite tige (115).

4. Dispositif de fixation de selle selon la revendication 3, **caractérisé en ce que** ledit ressort hélicoïdal (118) est age ncé de façon sensiblement coaxiale à ladite tige de butée par mise en prise (116).

5. Dispositif de fixation de selle selon au moins l'une des revendications 2 à 4 précédentes, **caractérisé en ce qu'**une plaque intérieure (119) est prévue pour supporter ladite tige de butée par mise en prise (116) .

6. Dispositif de fixation de selle selon au moins l'une quelconque des revendications 1 à 5 précédentes, **caractérisé en ce qu'**une partie de base (120) de ladite partie de selle (112) est fixée sur ladite partie rotative (111).

7. Dispositif de fixation de selle selon la revendication 6, **caractérisé en ce qu'**au moins un ressort support (121) est prévu entre ladite partie de selle (112) et ladite partie de base (120).

8. Une bicyclette à assistance motrice, munie d'un dispositif de fixation de selle selon au moins l'une des revendications 1 à 7 précédentes, **caractérisé en ce que** ladite liaison pivotante, entre ladite partie support (110) et ladite rotative (111), est agencée sur un côté dudit pilier de selle (19) opposé à une structure support de batterie, logeant au moins une batterie (39) pour alimenter en puissance électrique un moteur électrique (36) de ladite bicyclette à assistance motrice, tandis que ladite structure support de batterie est fixée à l'avant dudit tube de selle (22), ou entre ledit tube de selle (22) et une roue arrière (28) de ladite bicyclette.

9. Une bicyclette à assistance motrice, munie d'un dispositif de fixation de selle selon la revendication 8, **caractérisé en ce que** ladite bicyclette comprend un couvercle (90) sur un tube principal (10), dans laquelle ledit couvercle (90) comprend un couvercle supérieur (91), couvrant le tube principal (10), une partie inférieure dudit tube de selle (22), une partie inférieure d'un tube arrière (26) et une p artie inférieure de ladite structure de maintien de batterie, et un couvercle inférieur (92), couvrant ledit moteur électrique (36) et un boîtier d'un contrôleur (42).
